# EUROPEAN PATENT APPLICATION

(11) **EP 4 527 674 A1**
(43) Date of publication of application: **26.03.2025**
(21) Application number: 23020563.5
(22) Date of filing: 19.12.2023
(51) Int. Cl.: B60L 50/64, H01M 50/213, H01M 50/249, H01M 50/258, H01M 50/262

(54) **TRACTION BATTERY FOR SUPPLEMENTING ENERGY FOR A LIGHT SINGLE-TRACK VEHICLE**

(30) Priority: 19.09.2023 PL 44619523
(71) Applicant: Politechnika Slaska, 44-100 Gliwice (PL)
(72) Inventor: Fabis, Pawel, 41-500 Chorzow (PL)

(57) **Abstract**

The traction battery is made of replaceable elements, characterized by the fact that the replaceable elements are modules (2) mounted to the chamber (7) of the container (1) using a latch (11) and guides (8), with the modules (2) in the container ( 1) are connected in series, and the cells (14) contained in them are connected in parallel, each module (2) has at least two electrical contacts (4), and on the rear wall (9) it has a shutter (12) and a lock (13) . The traction battery has a shelf (3) and the module (2) has a holder (10).

## Description

The subject of the invention is a traction battery for quickly replenishing energy for a light two-wheeled vehicle.

### State of technical knowledge

There is a known patent application P.389662 which involves charging a battery by replacing a used one with a charged one. This is done by disassembling the used battery in the vehicle, replacing it and installing it with a charged one. Another solution is P.424307, which involves the production of electric cars equipped with lithium-ion batteries that can be replaced at fast charging and battery replacement stations. Such quick-replacement electric batteries can be mounted under the car's chassis or in the trunk, and existing quick-charging stations would be equipped with a supply of batteries that are continuously charged at an automated quick-change battery station.

Nowday's electric vehicles (single and multi-track) struggle with the problem of quickly replenishing energy in the traction battery. The latest designs of battery and drive systems allow for energy replenishment in approximately several dozen minutes. In the case of two-wheeled vehicles, such a long time to replenish energy is difficult to accept. At the same time, attention should be paid to the ecological aspect of electric vehicles, the emission of toxic compounds during operation is zero. This fundamental factor causes the adopted climate policy in the world to replace internal combustion vehicles with the so-called zero emissions, which is to result in a global reduction in the burden of carbon dioxide emissions on the natural environment. A typical battery of an electric vehicle, including a two-wheeler, is structurally divided into modules (sections) in which the cells are connected in series.

Electric vehicles currently offered have batteries with voltages of approximately 400V (rated voltage), which means that their structure must have approximately 110 cells connected in series. The structure of a classic electric vehicle traction battery consists of sections in which lithium-ion cells are used. These cells provide a relatively large amount of energy stored on board the vehicle. The cells used in the technology to make a traction battery have a cylindrical or rectangular shape.

A significant disadvantage of such batteries is their permanent connection of sections, which limits the possibility of quickly replacing a discharged battery with a charged one.

This solution is intended for light two-wheeled vehicles (motorcycles, mopeds and scooters) with electric drive. The aim of the solution is to quickly replenish energy in the vehicle.

The essence of the invention is a traction battery made of replaceable elements, characterized by the fact that the replaceable elements are modules mounted to the container chamber using a latch and guides, where the modules in the container are connected in series and the cells contained in them are connected in parallel, each module has at least two electrical contacts, and on the rear wall it has a shutter and a lock.

The traction battery has a shelf. The module has a handle.

The traction battery preferably has ten modules. The container has a mounting hole and a locating hole.

This solution allows you to quickly replenish the energy of an electric vehicle by dividing the battery structure into replaceable modules. The modules can be replaced manually, without the use of machines or special tools, which will allow for quick energy replenishment in the traction battery.

In this solution, modules 2 are equipped with cells 14 connected only in parallel. Each module has a voltage in the range of 2.5 ÷ 4.2V, which makes them safe to use and operate. By placing the module in the traction battery container, the modules are simultaneously connected in series, thus obtaining an appropriate increase in the voltage level to the level supported by the vehicle's drive system. The specific structure of the container allows for trouble-free division into modules. The modules are light and made of durable plastic, which ensures cell insulation, which does not make them difficult to replace.

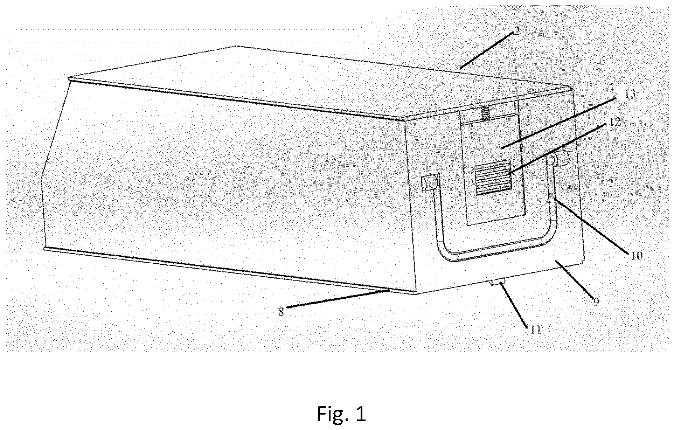

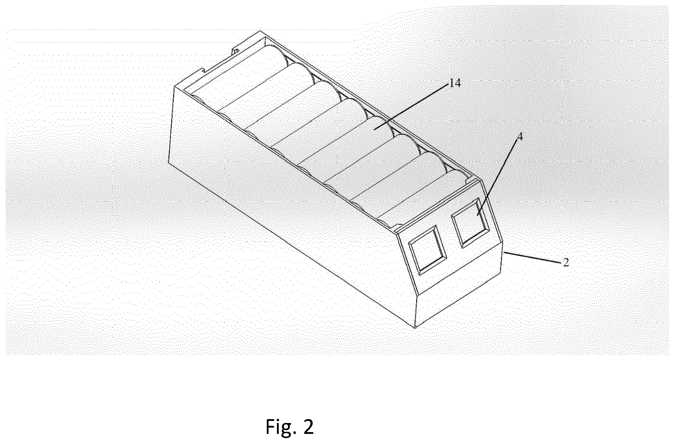

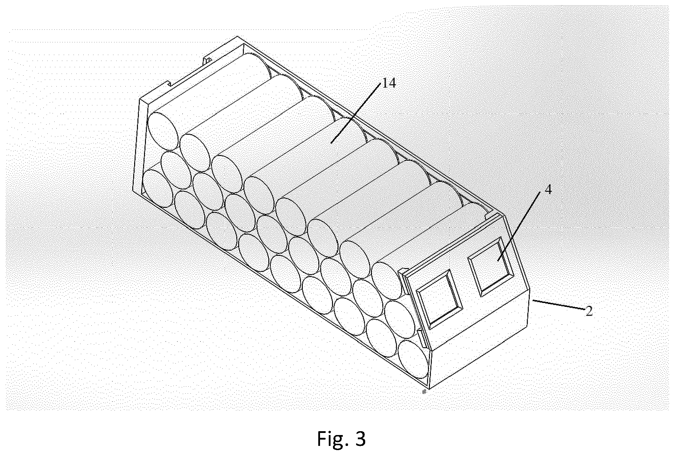

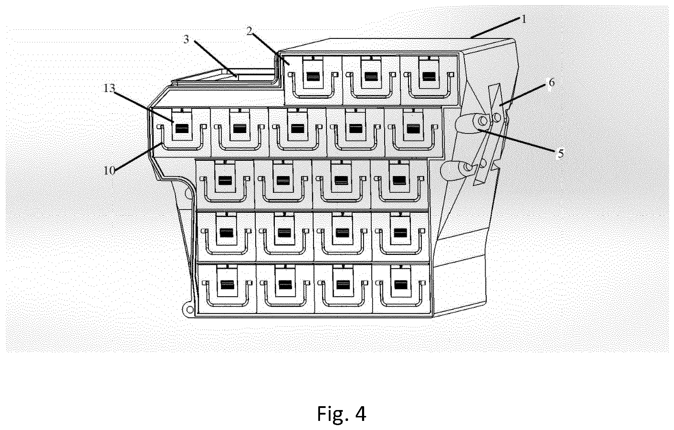

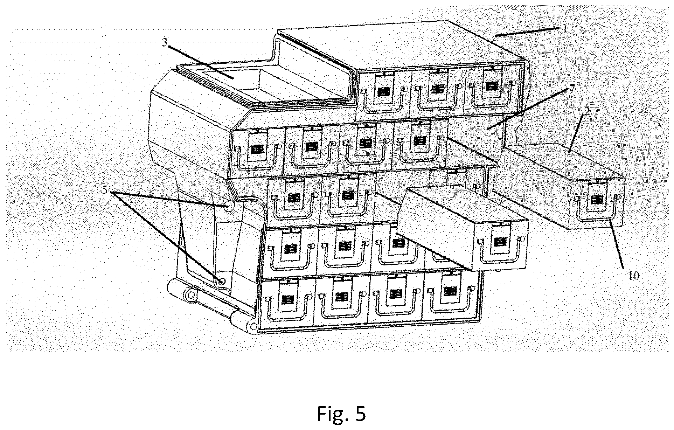

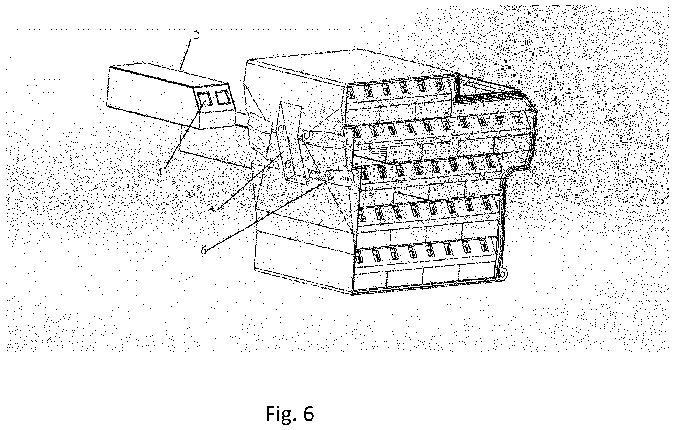

The invention is presented in the drawings, in which Fig. 1 shows an isometric view of the module, Fig. 2 a view of the module without a cover with visible cells and contacts, Fig. 3 a cross-sectional view of the module with cells, Fig. 4 a view of a container with assembled modules, Fig. 5 a view container with extended modules, Fig. 6 - a view of the traction battery container without built-in modules.

**The invention is presented in an example embodiment.**

Battery I creates a container 1 with an electrical installation composed of replaceable modules 2 containing 14 cells. Module 2 has two electrical contacts 4 enabling the connection of all modules 2 into one container 1. Container 1 has a shelf 3 for placing the unit controlling the operation of the traction battery (so-called BMS). - Battery Management System). There is a ratchet mechanism 11 on the rear wall of module 2, which protects module 2 against automatic sliding out and opening of the internal electric circuit. In addition, on the rear wall there is a handle 10 to facilitate removal of the module from the battery container 1, and a shutter 12 to facilitate the release of the lock 13 of module 2. Guides 8 are made on the side walls to prevent improper installation of module 2 and improper electrical connection. On the side of the container 1 there is a hole 5 for fastening the battery to the motorcycle frame and a positioning hole 6 for fastening the container 1 to the motorcycle frame. The cells 14 in the modules 2 have a cylindrical shape and are connected in parallel, and the modules 2 in the container 1 are connected in series. This form of connection allows for high battery voltages and high capacity to store enough energy to cover the appropriate distance by the vehicle. The rated voltage of standard lithium-ion cells is 3.6V, however, during the operation of the traction battery, this voltage changes from 2.5V when the cell is discharged to 4.2V when it is fully charged. Therefore, the working voltage range of the battery is variable. The battery voltage value depends on the number of modules connected in series.

### Legend:

- 1: - container
- 2: - module
- 3: - shelf
- 4: - contacts
- 5: - battery mounting hole
- 6: - locating hole for attaching the container to the frame
- 7: - chamber
- 8: - guides
- 9: - front wall
- 10: - handle
- 12: - blinds
- 13: - module lock
- 14: - cells

## Claims

1. A traction battery composed of replaceable elements, **characterized in that** the replaceable elements are modules (2) mounted to the chamber (7) of the container (1) using a latch (11) and guides (8), with the modules (2) in the container (1) are connected in series, and the cells (14) contained in them are connected in parallel, each module (2) has at least two electrical contacts (4), and on the rear wall (9) it has a shutter (12) and a lock (13).

2. Traction battery according to claim 1 **characterized in that** it has a shelf (3).

3. Traction battery according to claim 1, **characterized in that** the module (2) has a handle (10).

4. Traction battery according to claim 1, **characterized in that** it preferably has ten modules (2).

5. Traction battery according to claim 1, **characterized in that** the container (1) has a mounting hole (5) and a positioning hole 6.
